# EUROPÄISCHE PATENTSCHRIFT

(11) **EP 2 145 842 B1**
(45) Veröffentlichungstag und Bekanntmachung des Hinweises auf die Patenterteilung: **20.06.2012**
(21) Anmeldenummer: 09008794.1
(22) Anmeldetag: 04.07.2009
(51) Int. Cl.: B65G 1/04

(54) **Regallager**
Storage racks
Rayonnage

(30) Priorität: 17.07.2008 DE 202008009631 U
(43) Veröffentlichungstag der Anmeldung: 20.01.2010
(73) Patentinhaber: KEURO Besitz GmbH & Co. EDV-Dienstleistungs KG, D-77855 Achern-Gamshurst (DE)
(72) Erfinder: Stolzer, Armin, 55283 Nierstein (DE); Huber, Bernhard, 77876 Kappelrodeck (DE)
(74) Vertreter: Lemcke, Brommer & Partner

(56) Entgegenhaltungen:
- EP-A2- 0 116 152
- DE-A1- 3 440 456

## Beschreibung

Die Erfindung betrifft ein Regallager nach dem Oberbegriff des beigefügten Anspruchs 1. Solch ein Regallager umfasst mindestens ein Regal mit einer Anzahl von übereinander angeordneten Lagerplätzen für Paletten, die in den Lagerplätzen an stirnseitig angeordneten, vertikalen Regalstützen gehalten und seitlich horizontal aus den Lagerplätzen entnehmbar sind. Zum Entnehmen der Paletten aus den Lagerplätzen des Regals sowie zum Einlagern von Paletten in die Lagerplätze des Regals ist ein Regalbediengerät vorhanden, das an der Längsseite des Regals angeordnet ist und jeden Lagerplatz anfahren kann.

Auf den Paletten eines einschlägigen Regallagers werden insbesondere Bleche, Platinen und aus Metall bestehendes Langgut gelagert, um beispielsweise Material im Stahlhandel in geordneter Form vorzuhalten und zu Kommissionierungszwecken zu entnehmen, einer Bearbeitungsstation (beispielsweise einer Sägemaschine oder Blechbearbeitungsmaschine) zuzuführen und die Reststücke des Materials bzw. das bearbeiteten Material wieder in das Regallager einzulagern. Hierzu fährt das Regalbediengerät an den Lagerplatz, in dem die Palette mit dem angeforderten Material eingelagert ist, entnimmt diese Palette mittels eines am Regalbediengerät angebrachten Manipulators seitlich aus diesem Lagerplatz und verfährt die Palette zum untersten Lagerplatz des Regals, der von einem Stationswagen gebildet wird. Das Regalbediengerät übergibt die entsprechende Palette auf den Stationswagen. Der Stationswagen ist seinerseits auf einem Schienenpaar horizontal aus dem Regal heraus verfahrbar, wobei das Schienenpaar auf der dem Regalbediengerät abgewandten Seite des untersten Lagerplatzes aus dem Regal herausführt; wenn das Regalbediengerät hinter dem Regal angeordnet ist, kann der Stationswagen auf seinen Schienen also auf der Vorderseite des Regals aus diesem herausfahren.

Die auf dem Stationswagen aus dem Regal herausgefahrene Palette oder das auf dieser Palette befindliche Material wird dann üblicherweise in einer Übergabestation einer Bearbeitungsmaschine zugeführt - beispielsweise wird vom Material ein gewünschtes Stück abgesägt - und das Reststück des Materials bzw. das bearbeitete Material wird wieder auf dem Stationswagen bzw. auf der darauf befindlichen Palette abgelegt, wonach der Stationswagen wieder in das Regal zurückfährt und den untersten Lagerplatz einnimmt. Von dort kann das Regalbediengerät die Palette wieder entnehmen, an den ursprünglichen oder einen anderen, von einer Regallagersteuerung zugewiesenen Lagerplatz verfahren und dort einlagern.

Beim Vorhalten von Blechen in Regallagern der vorliegenden Art, die mittels des Stationswagens zu Blechbearbeitungsmaschinen, wie Flachbett-Lasermaschinen verbracht werden, hat es sich als vorteilhaft erwiesen, neben dem eben beschriebenen Stationswagen einen Oberwagen als zweiten Stationswagen vorzusehen. Dieser Oberwagen besitzt prinzipiell die gleichen Eigenschaften wie der Stationswagen, wobei er oberhalb des Stationswagens im Regal angeordnet ist und dort ebenfalls einen Lagerplatz einnimmt. Der Stationswagen und der Oberwagen können unabhängig voneinander aus dem Regal heraus und wieder in das Regal hinein verfahren werden, wobei einer der beiden, meist der Stationswagen, als Vorlagerwagen zum Bereitstellen des Materials verwendet wird, während der andere Wagen, meist der Oberwagen, als Rücklagerwagen zum Wiedereinlagern des bearbeiteten Materials in das Regal dient.

Das Vorhandensein von zwei unabhängig voneinander zu betreibenden Wagen in einem Regallager der vorliegenden Art wirft allerdings einige Probleme auf: Die vertikalen Regalstützen, die das Regalgerüst bilden, sind zur optimalen Raumausnutzung üblicherweise gerade so weit voneinander beabstandet, dass die Paletten gerade noch horizontal seitlich zwischen den Regalstützen hindurch bewegt werden können; der Abstand zwischen den jeweils stirnseitig angeordneten Regalstützen entspricht also der Länge der eingelagerten Paletten zuzüglich eines gewissen Spielraums, um die Paletten zwischen den Regalstützen seitlich aus dem Regal herausfördern bzw. in dieses einbringen zu können. Da nun der Stationswagen ganze Paletten ebenfalls seitlich aus dem Regal herausfährt, benötigt er entlang seines ganzen Verfahrwegs auf den Schienen einen lichten Raum, der in der Breite in etwa dem Abstand zwischen den Regalstützen entspricht. Demgemäß kann der Oberwagen nicht einfach ebenso wie der Stationswagen auf einem zweiten Schienenpaar verfahren werden, das auf gleicher Höhe wie das erste Schienenpaar des Stationswagens verläuft, denn das zweite Schienenpaar müsste ebenfalls in das Regal hineinreichen und dementsprechend einen Abstand zwischen den beiden Schienen aufweisen, der kleiner als der Abstand der Regalstützen und somit auch kleiner als die Ausdehnung der auf dem Stationswagen transportierten Paletten ist. Stützen des Oberwagens, mittels denen dieser auf dem zweiten Schienenpaar verfahrbar ist, würden daher dem Stationswagen in die Quere kommen und verhindern, dass der Stationswagen und der Oberwagen völlig unabhängig voneinander zwischen dem Regal und der Bearbeitungs- bzw. Kommissionierstation verfahren werden können.

Ein Ansatz, diese Problemstellung zu vermeiden, liegt darin, das zweite Schienenpaar oberhalb des Stationswagens zu verlegen, also aufzuständern. Damit ist ein Queren des Verfahrwegs des Oberwagens allerdings nicht mehr möglich; des Weiteren bilden aufgeständerte Schienen Störkanten für automatische Zuführeinrichtungen, die das Material vom Oberwagen und insbesondere vom Stationswagen entnehmen und der Bearbeitungsstation zuführen.

Ein anderer Ansatz zur Vermeidung der beschriebenen Problemstellung besteht darin, die Regalstützen weiter als üblich voneinander entfernt anzuordnen, so dass das zweite Schienenpaar mit einer Spurweite in das Regal geführt werden kann, die größer ist als die Palettenlänge. Der Oberwagen kann dann also an Schienen geführt werden, die auf gleicher Höhe wie das erste Schienenpaar angeordnet sind, ohne dass die hierfür nötigen Stützen den Bewegungsweg des Stationswagens beeinträchtigen. Allerdings wird hierdurch nicht nur das Regal breiter als eigentlich notwendig, sondern es ist außerdem nötig, im Bereich der normalen Lagerplätze, also mit Ausnahme der Lagerplätze, die durch den Stationswagen und den Oberwagen gebildet werden, zusätzliche Abstandselemente an die Regalstützen anzubringen, um die Paletten halten zu können; die Paletten können dann nicht mehr direkt an den Regalstützen gehalten werden. Dies bedeutet neben einem erhöhten Platzbedarf einen erhöhten Materialaufwand; darüber hinaus kann ein bestehendes Regallager im Rahmen dieses Lösungsansatzes nicht mit einem Oberwagen nachgerüstet werden.

Der vorliegenden Erfindung liegt daher die Aufgabe zugrunde, eine demgegenüber verbesserte Lösung zur Vermeidung der beschriebenen Problemstellung zu schaffen.

Gelöst ist diese Aufgabe durch ein Regallager mit den Merkmalen des beigefügten Anspruchs 1. Bevorzugte Weiterbildungen des erfindungsgemäßen Regallagers sind in den Ansprüchen 2 bis 10 niedergelegt.

Der mit der vorliegenden Erfindung vorgeschlagene Lösungsansatz setzt am Oberwagen an und lässt das Regal im Übrigen unverändert, wobei er ermöglicht, dass das zweite Schienenpaar, auf dem der Oberwagen verfahrbar ist, zwar eine größere Spurweite als das erste Schienenpaar aufweisen muss, jedoch im Wesentlichen auf gleicher Höhe mit diesem angeordnet werden und in das Regal hinein führen kann, also eine Spurweite aufweist, die kleiner als die Palettenlänge ist. Es werden mithin die Vorteile beider eingangs erwähnten Lösungsansätze nach dem Stand der Technik vereint, ohne deren jeweilige Nachteile in Kauf nehmen zu müssen.

Die erfindungsgemäße Modifikation des Oberwagens besteht darin, dass dieser an seiner dem Regalbediengerät abgewandten Seite eine Tragstruktur erhält, die zumindest im Bereich des Stationswagens eine horizontale lichte Weite aufweist, die größer als die Palettenlänge ist, während sie mit auf dem zweiten Schienenpaar laufenden Rädern versehen ist. Diese Tragstruktur kann wegen ihrer eben genannten lichten Weite im Bereich des Stationswagens zwar nicht in das Regal zwischen die Regalstützen eingefahren werden, da die Regalstützen kaum weiter auseinanderstehen als die Paletten lang sind; dies betrifft jedoch lediglich die Tragstruktur des Oberwagens, wohingegen die nicht zur Tragstruktur gehörenden Teile des Oberwagens, die zur Aufnahme der Paletten vorgesehen sind, erfindungsgemäß schmaler ausgebildet sind, so dass sie zwischen die vertikalen Regalstützen des Regals einfahrbar sind. Der erfindungsgemäße Oberwagen steht in seinem in das Regal eingefahrenen Zustand also nicht komplett innerhalb der Grundfläche des Regals, da seine Tragstrüktur vor den Regalstützen stehen bleiben muss. Seine Funktion wird dadurch jedoch auf keine Weise beeinträchtigt, denn die eine Palette aufnehmenden Teile des Oberwagens bilden wie bisher einen vollständigen Lagerplatz des Regals.

Die Tragstruktur des Oberwagens ist vorzugsweise als portalförmiger Rahmen mit einer Quertraverse und zwei Tragstützen ausgeführt, wobei an den Enden der Tragstützen die Räder zur Führung des Oberwagens auf dem zweiten Schienenpaar angeordnet sind. Vorzugsweise sind die Räder bezüglich der lichten Weite der Tragstützen nach innen eingezogen an den Tragstützenenden angebracht, um den Unterschied zwischen der lichten Weite zwischen den Tragstützen, die zumindest der Palettenlänge entsprechen muss, und der Spurweite des zweiten Schienenpaars, die kleiner als die Palettenlänge ist, auszugleichen. Es ist jedoch ebenso möglich und im Rahmen der vorliegenden Erfindung liegend, dass die Tragstützen nicht geradlinig vertikal verlaufen, sondern beispielsweise so gebogen sind, dass der Stationswagen mit aufliegender Palette zwischen den Tragstützen hindurch verfahrbar ist.

Besonders bevorzugt ist eine Ausgestaltung der Tragstruktur des Oberwagens, bei der die Tragstützenenden mit jeweils parallel zu den Schienen des zweiten Schienenpaars verlaufenden, unteren Kragarmen versehen sind. Diese Kragarme können einen Teil oder gegebenenfalls auch die ganze Breite einer auf dem Oberwagen aufliegenden Palette untergreifen und so die notwendige Stabilität des Oberwagens gegen ein Umkippen unter Last schaffen. Ein Abstützen derjenigen Teile des Oberwagens, die in das Regal einfahrbar sind und die Palette aufnehmen, wird hierdurch überflüssig. Sinnvollerweise sind die Räder, mit denen der Oberwagen auf dem zweiten Schienenpaar läuft, über diese unteren Kragarme verteilt angeordnet.

Die nicht zur Tragstruktur gehörenden Teile des Oberwagens können ihrerseits aus zwei oder mehr zwischen die vertikalen Stützen des Regals einfahrbaren, oberen Kragarmen bestehen. Dies spart Gewicht und vereinfacht die Konstruktion; die Auflagerflächen für die Paletten können jedoch auch in anderer Weise ausgeführt sein.

Die beiden Schienenpaare zur Führung des Stationswagens und des Oberwagens sind vorzugsweise am Boden des Regalstandorts angebracht, was ein Queren derselben erleichtert und den baulichen Aufwand minimiert. Eine - vorzugsweise bodennahe - Aufständerung der Schienenpaare ist im Rahmen der vorliegenden Erfindung allerdings ebenfalls möglich.

Bevorzugterweise bildet der erfindungsgemäß ausgestaltete Oberwagen den unmittelbar oberhalb des Stationswagens befindlichen Lagerplatz, um kleinstmögliche Abmessungen der beiden Wagen zu gewährleisten. Je nach Anwendungsfall kann es jedoch vorgesehen sein, dass zwischen dem Stationswagen und dem Oberwagen ein oder mehrere normale Lagerplätze angeordnet sind.

Die Lagerplätze werden zwischen den vertikalen Regalstützen vorzugsweise dadurch gebildet, dass Gleitschienen oder Halteschienen zur Aufnahme der Paletten-Stirnseiten an den stirnseitig angeordneten vertikalen Regalstützen befestigt sind. Die Paletten können dann auf Gleitkufen oder Rollen vom Manipulator des Regalbediengeräts in die Gleitschienen oder Halteschienen eingeschoben bzw. aus diesen herausgezogen werden, oder mittels Teleskopgabeln des Regalbediengeräts auf Auflageschienen an den Regalstützen abgelegt bzw. von diesen aufgenommen werden, um die Paletten aus dem Regal auszulagern bzw. in dieses einzulagern.

Zweckmäßigerweise enthält das erfindungsgemäße Regallager eine Mehrzahl von stirnseitig aneinandergestellten Regalen, die von einem gemeinsamen Regalbediengerät angefahren werden können, gegebenenfalls in zwei, vor und hinter dem Regalbediengerät angeordneten Regalreihen. Das Regalbediengerät kann bedarfsweise einen gemeinsamen Stationswagen und Oberwagen anfahren, oder, wenn eine höhere Durchsatzkapazität gewünscht ist, mehrere gemeinsame Stationswagen und Oberwagen.

Ein Ausführungsbeispiel für ein erfindungsgemäßes Regallager wird im Folgenden anhand der beigefügten Zeichnungen näher beschrieben und erläutert. Es zeigen:
- Figur 1: eine seitliche Ansicht auf ein erfindungsgemäß ausgebildetes Regallager;
- Figur 2: eine perspektivische Ansicht des Regallagers aus Figur 1, mit ausgefahrenem Stationswagen;
- Figur 3: eine perspektivische Ansicht wie Figur 2, jedoch mit ausgefahrenem Oberwagen;
- Figur 4: eine perspektivische Ansicht eines Teils des in Figur 1 gezeigten Regallagers;
- Figur 5: eine perspektivische Gesamtansicht des Regallagers.

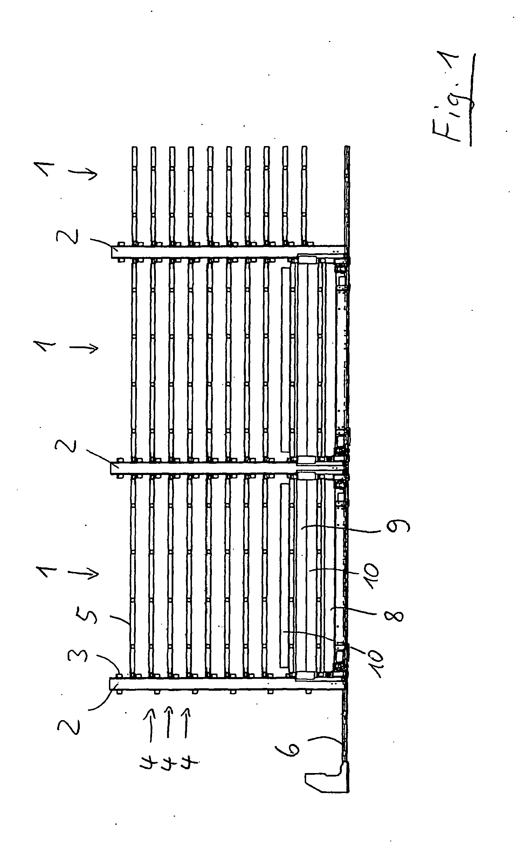

Das in Figur 1 (teilweise) gezeigte Regallager umfasst eine Anzahl von Regalen 1, von denen hier drei in Reihe nebeneinander angeordnete Regale 1 sichtbar sind. Diese Regale 1 werden im Wesentlichen durch vertikale Regalstützen 2 gebildet, die die Stirnseiten der Regalfächer bilden und die sich jeweils zwei nebeneinander angeordnete Regale 1 teilen. An den vertikalen Regalstützen 2 sind horizontal verlaufende Gleitschienen 3 oder Auflageschienen angebracht, die jeweils einen Lagerplatz 4 ausbilden und in welche die Stirnseiten von Paletten 5 eingeschoben werden können. Die Paletten 5 tragen die (nicht dargestellten) eingelagerten Werkstücke, wobei sie ihrerseits ihr Gewicht über die Gleitschienen 3 oder Auflageschienen in die Regalstützen 2 abtragen. Sie können seitlich horizontal aus den Lagerplätzen 4 entnommen werden, also senkrecht zur Zeichnungsebene, was ein in der hier dargestellten Ansicht hinter den Regalen 1 auf einer Fahrschiene 6 verfahrbares, hier nicht sichtbares Regalbediengerät 7 vornimmt.

Die in Figur 1 links und mittig angeordneten Regale 1 verfügen an ihren untersten beiden Lagerplätzen 4 jeweils über einen Stationswagen 8 und einen Oberwagen 9, wobei hier sowohl der Stationswagen 8 als auch der Oberwagen 9 eine Palette 5 tragen, und auf der Palette 5 jeweils eine Platine 10 als zu bearbeitendes Werkstück aufliegt.

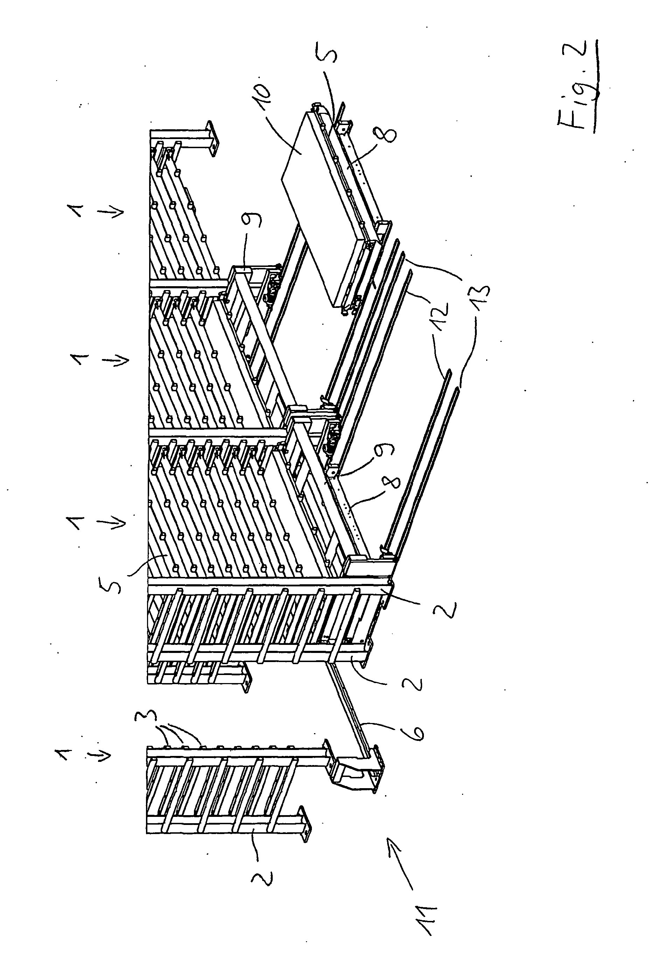

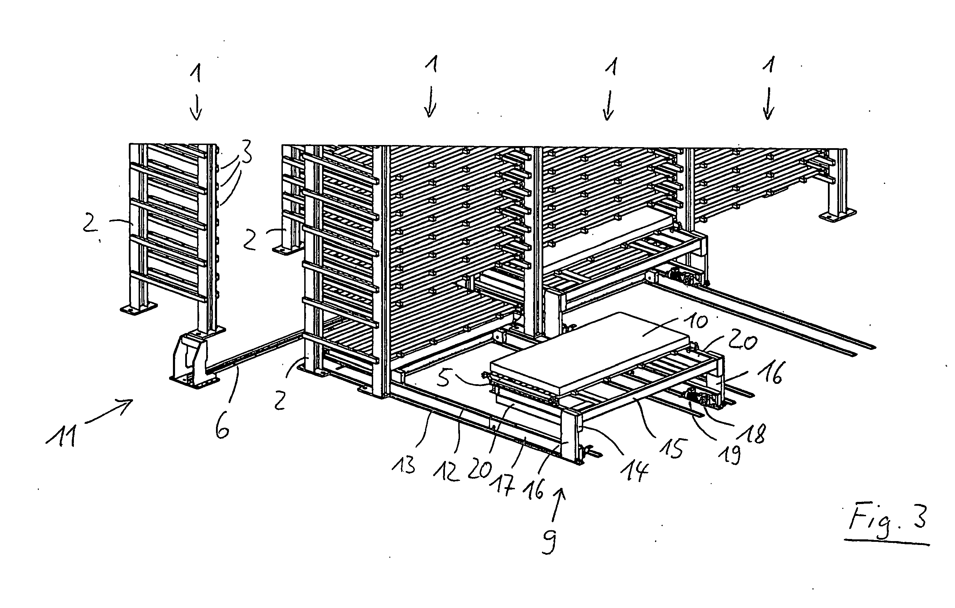

Die Figuren 2 und 3 zeigen in sich entsprechenden perspektivischen Ansichten den Stationswagen 8 (Figur 2) bzw. den Oberwagen 9 (Figur 3) detaillierter. Anhand dieser Figuren kann im Übrigen erkannt werden, dass das vorliegende Ausführungsbeispiel für ein Regallager aus zwei nebeneinander angeordneten Reihen von Regalen 1 besteht. Diese bilden zwischen sich eine Regalgasse 11, in der das Regalbediengerät 7 entlang seiner Fahrschiene 6 verfahrbar angeordnet ist. Durch die perspektivische Darstellung sind des Weiteren ein erstes Schienenpaar 12 für den Stationswagen 8 und ein zweites Schienenpaar 13 für den Oberwagen 9 zu erkennen, die am Boden des Regallagerstandorts verlegt sind und aus dem Regal 1 auf der dem Regalbediengerät 7 bzw. der Regalgasse 11 abgewandten Seite des Regals 1 aus diesem herausführen.

Wie Figur 2 zeigt, ist der Stationswagen 8 in herkömmlicher Art und Weise als Blechwagen mit etwas engerer Spurweite ausgeführt; er kann mitsamt einer darauf aufliegenden Palette 5 mit Platine 10 in den untersten Lagerplatz 4 des Regals 1 eingefahren und auf dem ersten Schienenpaar 12 aus diesem nach vorne herausgefahren werden. Im eingefahrenen Zustand kann die Palette 5 vom Regalbediengerät 7 nach hinten in die Regalgasse 11 entnommen und an jeden beliebigen Lagerplatz 4 des Regallagers verbracht werden. Umgekehrt kann jede beliebige Palette 5 des Regallagers vom Regalbediengerät 7 auf dem Stationswagen 8 abgelegt werden.

In Figur 3 ist ein Beispiel eines erfindungsgemäß ausgestalteten Oberwagens 9 detaillierter zu sehen. Dieser besteht aus einem biege- und verwindungssteifen portalförmigen Rahmen 14 mit einer Quertraverse 15 und zwei Tragstützen 16, an deren Enden nach innen eingezogene untere Kragarme 17 angebracht sind. Die unteren Kragarme 17 tragen Räder 18, die auf dem zweiten Schienenpaar 13 laufen und mittels Motoren 19 angetrieben sind. Die Auflagefläche des Oberwagens 9 für die Palette 5 und die darauf aufliegende Platine 10 wird hier durch vier obere Kragarme 20 gebildet, kann jedoch vorzugsweise auch durch lediglich zwei obere Kragarme 20 an den Endbereichen der Palette 5 gebildet werden, wobei die Kragarme 20 die Funktion der Gleitschienen 3 bzw. Auflageschienen des Regals 1 übernehmen. Die oberen Kragarme 20 sind so lang dimensioniert, dass die Palette 5 vollständig im zweituntersten Lagerplatz des Regals 1 aufgenommen wird, um vom Regalbediengerät 7 ergriffen werden zu können. Die oberen Kragarme 20 sind hierfür schmaler als der portalartige Rahmen 14 ausgebildet, so dass sie zwischen die vertikalen Regalstützen 2 passen, wie insbesondere in Figur 2 zu sehen ist. Der portalartige Rahmen 14 selbst ist breiter ausgebildet, um den Verfahrweg des Stationswagens 8 nicht zu behindern, und bleibt daher außerhalb des Regals 1 stehen, wenn der Oberwagen 9 in das Regal 1 eingefahren ist (Figur 2).

Wie anhand Figur 3 ebenfalls gut zu erkennen ist, sind die unteren Kragarme 17 ebenso lang ausgebildet wie die oberen Kragarme 20, so dass der Oberwagen 9 insgesamt eine hohe Stabilität erhält und bei aufliegender Platine 10 nicht nach hinten abkippen kann, auch ohne die-oberen Kragarme 20 an der Rückseite des Oberwagens 9 zusätzlich abstützen zu müssen. Die gegenüber der Tragstützen16 des portalartigen Rahmens 14 des Oberwagens 9 nach innen eingezogene Anordnung der unteren Kragarme 17 ermöglicht, dass die Spurweite des zweiten Schienenpaars 13 so gewählt werden kann, dass es aus dem Regal 1 herausführt, bzw. in dieses hineinführt, und zwar zwischen den stirnseitig angeordneten Regalstützen 2 hindurch. Gleichwohl verbleibt für den Stationswagen 8 zwischen den Tragstützen 16 des Oberwagens 9 genügend lichter Raum, um zusammen mit einer aufliegenden Palette 5 unter dem Oberwagen 9 hindurch bewegt werden zu können. Der Oberwagen 9 und der Stationswagen 8 sind also völlig unabhängig voneinander betreibbar, beispielsweise der Stationswagen 8 als Vorlagerwagen und der Oberwagen 9 als Rücklagerwagen, während das Regal 1 dennoch keine speziellen Anpassungen erfahren musste und sämtliche Schienen am Boden verlegt werden konnten.

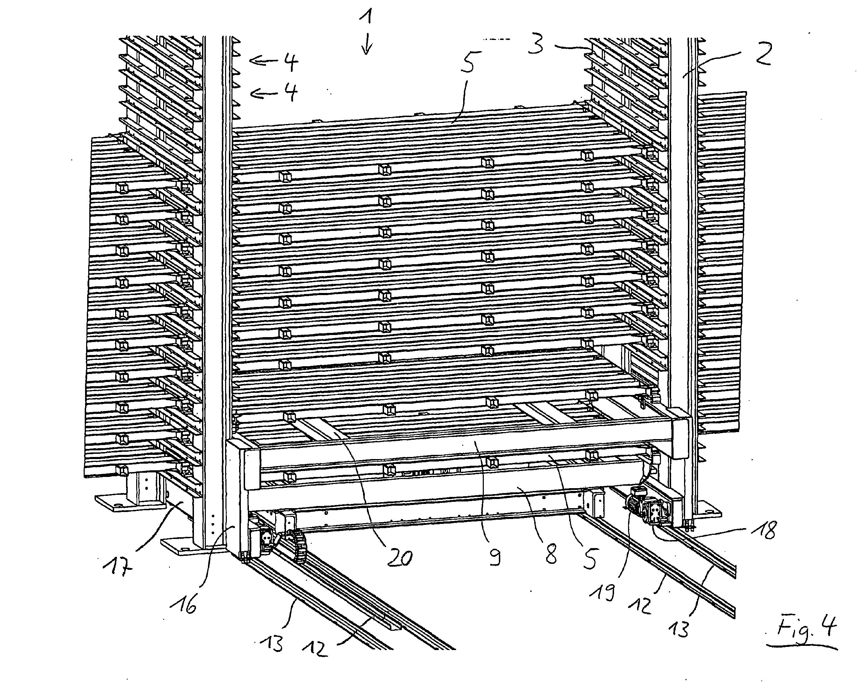

Figur 4 zeigt nochmals eine perspektivische Teildarstellung eines Regals 1 aus Figur 1, wobei hier die Ausbildung der Gleitschienen 3 an den Regalstützen 2, auf denen die Paletten 5 ein- und ausgelagert werden können, und die jeweils einen Regalplatz 4 bilden, besser sichtbar ist. Der in das Regal 1 eingefahrene Oberwagen 9 mit seiner Quertraverse 15 und seinen Tragstützen 16, die vor den Regalstützen 2 stehen, sowie mit seinen unteren Kragarmen 17, seinen oberen Kragarmen 20 und seinen über Motoren 19 angetriebenen Rädern 18, die auf dem zweiten Schienenpaar 13 laufen, ist hier nicht mit einer Palette 5 belegt, wohingegen der darunter angeordnete, auf dem ersten Schienenpaar 12 laufende Stationswagen 8 eine Palette 5 trägt. Hierdurch wird verdeutlicht, dass die Palette 5 zusammen mit dem Stationswagen 8 zwischen den Tragstützen 16 des Oberwagens 9 hindurch bewegt werden kann, obwohl das zweite Schienenpaar 13, auf dem der Oberwagen 9 läuft, eine Spurweite aufweist, die geringer als die Länge einer Palette 5 ist und demgemäß ein Verlegen des zweiten Schienenpaars 13 in das Regal 1 hinein, zwischen den Regalstützen 2 hindurch möglich ist.

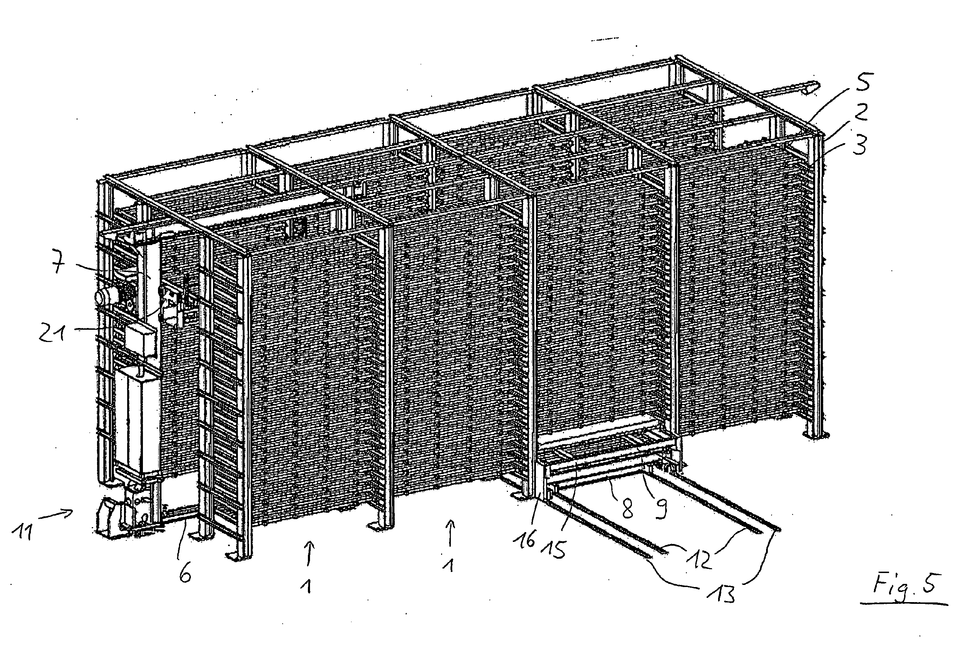

Figur 5 zeigt schließlich eine perspektivische Gesamtansicht des vorliegenden Regallagers. Es enthält insgesamt acht Regale 1, von denen jeweils vier Regale 1 vor und hinter einer Regalgasse 11 angeordnet sind. In der Regalgasse 11 läuft auf der Fahrschiene 6 das Regalbediengerät 7, das mit einer Fahrbühne 21 und (nicht erkennbaren) Manipulatoren zum Herausziehen von Paletten 5 aus ihren Lagerplätzen bzw. zum Einschieben derselben in die Lagerplätze versehen ist. Das zweite Regal 1 von rechts in der vor der Regalgasse 11 liegenden Regalreihe enthält den Stationswagen 8 und den Oberwagen 9, die auf dem ersten Schienenpaar 12 bzw. dem zweiten Schienenpaar 13 aus dem Regallager heraus verfahren werden können, um einzelne, vom Regalbediengerät 7 aus ihrem Lagerplatz geholte und auf dem Stationswagen 8 oder Oberwagen 9 abgelegte Paletten 5 mit den darauf gelagerten Werkstücken einer vor dem Regallager angeordneten (nicht dargestellten) Bearbeitungsmaschine zuzuführen und von dort wieder zurück in das Regallager rückzuführen. Sowohl der Stationswagen 8 als auch der Oberwagen 9 sind in der vorliegenden Darstellung ganz in das Regal 1 eingefahren und können dementsprechend Paletten 5 vom Regalbediengerät 7 übernehmen, wobei die durch die Quertraverse 15 und die Tragstützen 16 gebildete Tragstruktur des Oberwagens 9 über das Regal 1 hinaussteht.

Wie insbesondere anhand Figur 5 deutlich wird, ist durch die Erfindung eine Lösung der eingangs genannten Problemstellung geschaffen worden, mit der zwei unabhängig voneinander verfahrbare Wagen, der Oberwagen 9 und der Stationswagen 8, ohne konstruktive Änderung der Regale 1 auf Schienen 12, 13 aus dem Regal 1 herausgefahren werden können, wobei die Schienen 12, 13 leicht gequert werden können und wobei eine freie Zugänglichkeit beider Wagen 8, 9 für jegliche Art von Be- und Entladeeinheit gegeben ist.

### Bezugszeichenliste

- 1: Regal
- 2: Regalstützen
- 3: Gleitschienen
- 4: Lagerplätze
- 5: Paletten
- 6: Fahrschiene
- 7: Regalbediengerät
- 8: Stationswagen
- 9: Oberwagen
- 10: Platinen
- 11: Regalgasse
- 12: Schienenpaar (erstes)
- 13: Schienenpaar (zweites)
- 14: portalartiger Rahmen
- 15: Quertraverse
- 16: Tragstützen
- 17: Kragarme (untere)
- 18: Räder
- 19: Motor
- 20: Kragarme (obere)
- 21: Fahrbühne

## Patentansprüche

1. Regallager, umfassend mindestens ein Regal (1) mit einer Anzahl von übereinander angeordneten Lagerplätzen (4) für Paletten (5), die in den Lagerplätzen (4) an stirnseitig angeordneten, vertikalen Regalstützen (2) gehalten und seitlich horizontal aus den Lagerplätzen (4) entnehmbar sind, ein Regalbediengerät (7) zum Entnehmen und Einlagern von Paletten (5) aus den und in die Lagerplätze (4) sowie einen Stationswagen (8), der den untersten Lagerplatz (4) bildet, zur Aufnahme einer Palette (5) vorgesehen ist und auf einem ersten Schienenpaar (12), das auf der dem Regalbediengerät (7) abgewandten Seite des Regals (1) aus dem Regal (1) herausführt, horizontal verfahrbar ist, wobei sich oberhalb des Stationswagens (8) ein Oberwagen (9) befindet, der einen weiteren Lagerplatz (4) bildet, zur Aufnahme einer Palette (5) vorgesehen ist und auf einem zweiten Schienenpaar (13), das auf der dem Regalbediengerät (7) abgewandten Seite des Regals (1) aus dem Regal (1) herausführt, horizontal verfahrbar ist,
**dadurch gekennzeichnet,**
**dass** das zweite Schienenpaar (13) im Wesentlichen in gleicher Höhe wie das erste Schienenpaar (12) verläuft, demgegenüber mit einer größeren Spurweite versehen ist und ebenfalls aus dem Regal (1) herausführt, wobei der Oberwagen (9) an seiner dem Regalbediengerät (7) abgewandten Seite eine Tragstruktur (15, 16) umfasst, die im Bereich des Stationswagens (8) eine horizontale lichte Weite aufweist, die größer als die Länge einer Palette (5) ist, und die mit auf dem zweiten Schienenpaar (13) laufenden Rädern (18) versehen ist, während die nicht zur Tragstruktur (15, 16) gehörenden Teile (17, 20) des Oberwagens (9) zwischen die vertikalen Regalstützen (2) des Regals (1) einfahrbar sind.

2. Regallager nach Anspruch 1,
**dadurch gekennzeichnet,**
**dass** die Tragstruktur des Oberwagens (9) als portalförmiger Rahmen (14) mit einer Quertraverse (15) und zwei Tragstützen (16), an deren Enden die Räder (18) angeordnet sind, ausgeführt ist.

3. Regallager nach Anspruch 2,
**dadurch gekennzeichnet,**
**dass** die Räder (18) des Oberwagens (9) bezüglich der lichten Weite der Tragstützen (16) nach innen eingezogen an den Tragstützenenden angeordnet sind.

4. Regallager nach mindestens einem der Ansprüche 2 oder 3,
**dadurch gekennzeichnet,**
**dass** die Tragstützenenden des Oberwagens (9) mit jeweils parallel zu den Schienen des zweiten Schienenpaars (13) verlaufenden unteren Kragarmen (17) versehen sind, an welchen die Räder (18) befestigt sind.

5. Regallager nach mindestens einem der Ansprüche 1 bis 4,
**dadurch gekennzeichnet,**
**dass** die nicht zur Tragstruktur gehörenden Teile des Oberwagens (9) im Wesentlichen aus zwei oder mehr zwischen die vertikalen Regalstützen (2) des Regals (1) einfahrbaren, an der Tragstruktur befestigten oberen Kragarmen (20) bestehen.

6. Regallager nach Anspruch 5,
**dadurch gekennzeichnet,**
**dass** zwei obere Kragarme (20) vorhanden sind, die die Paletten (5) an deren stirnseitigen Endbereichen unterstützen und die Funktion eines Lagerplatzes (4) übernehmen.

7. Regallager nach mindestens einem der Ansprüche 1 bis 6,
**dadurch gekennzeichnet,**
**dass** die beiden Schienenpaare (12, 13) am Boden des Regalstandorts verlegt sind.

8. Regallager nach mindestens einem der Ansprüche 1 bis 7,
**dadurch gekennzeichnet,**
**dass** der Oberwagen (9) den unmittelbar oberhalb des Stationswagens (8) befindlichen Lagerplatz (4) bildet.

9. Regallager nach mindestens einem der Ansprüche 1 bis 8,
**dadurch gekennzeichnet,**
**dass** die Lagerplätze (4) mit stirnseitigen, an den vertikalen Regalstützen (2) befestigten Gleitschienen (3) oder Halteschienen zur Aufnahme der Paletten-Stirnseiten versehen sind.

10. Regallager nach mindestens einem der Ansprüche 1 bis 9,
**dadurch gekennzeichnet,**
**dass** es eine Mehrzahl von stirnseitig aneinander gestellten Regalen (1) mit einem gemeinsamen Regalbediengerät (7) und jeweils mindestens einem gemeinsamen Stationswagen (8) und Oberwagen (9) umfasst.

## Claims

1. Storage rack, comprising at least one rack (1) having a number of storage locations (4), arranged one above the other, for pallets (5) which are held in the storage locations (4) on vertical rack supports (2) arranged at their end faces and which are removable horizontally from the storage locations (4) at the sides, a rack-servicing apparatus (7) for removing pallets (5) from and inserting pallets (5) into the storage locations (4), and a station cart (8) which forms the lowermost storage location (4), is provided for receiving a pallet (5) and is movable horizontally on a first pair of rails (12) which leads out of the rack (1) on the side of the rack (1) remote from the rack-servicing apparatus (7), there being located above the station cart (8) an upper cart (9) which forms a further storage location (4), is provided for receiving a pallet (5) and is movable horizontally on a second pair of rails (13) which leads out of the rack (1) on the side of the rack (1) remote from the rack-servicing apparatus (7),
**characterised in that**
the second pair of rails (13) runs at substantially the same height as the first pair of rails (12), is provided with a larger track width than the first pair of rails and likewise leads out of the rack (1), the upper cart (9) comprising on its side remote from the rack-servicing apparatus (7) a support structure (15, 16) the horizontal inside width of which, in the region of the station cart (8), is greater than the length of a pallet (5) and which is provided with wheels (18) running on the second pair of rails (13), while the parts (17, 20) of the upper cart (9) not belonging to the support structure (15, 16) are arranged to be introduced between the vertical rack supports (2) of the rack (1).

2. Storage rack according to claim 1,
**characterised in that**
the support structure of the upper cart (9) is in the form of a gantry-like frame (14) having a cross-bar (15) and two support members (16) at the ends of which the wheels (18) are arranged.

3. Storage rack according to claim 2,
**characterised in that**
the wheels (18) of the upper cart (9) arranged at the ends of the support members are positioned inwardly in respect of the inside width of the support members (16).

4. Storage rack according to at least one of claims 2 and 3,
**characterised in that**
the ends of the support members of the upper cart (9) are provided with lower cantilever arms (17) running parallel to the rails of the second pair of rails (13), to which arms the wheels (18) are attached.

5. Storage rack according to at least one of claims 1 to 4,
**characterised in that**
the parts of the upper cart (9) not belonging to the support structure consist substantially of two or more upper cantilever arms (20) which are attached to the support structure and are arranged to be introduced between the vertical rack supports (2) of the rack (1).

6. Storage rack according to claim 5,
**characterised in that**
there are two upper cantilever arms (20) which support the pallets (5) in their end-face-side end regions and assume the function of a storage location (4).

7. Storage rack according to at least one of claims 1 to 6,
**characterised in that**
the two pairs of rails (12, 13) are laid on the floor on which the rack stands.

8. Storage rack according to at least one of claims 1 to 7,
**characterised in that**
the upper cart (9) forms the storage location (4) located immediately above the station cart (8).

9. Storage rack according to at least one of claims 1 to 8,
**characterised in that**
the storage locations (4) are provided with end-face-side slide rails (3) or holding rails, which are attached to the vertical rack supports (2), for receiving the end faces of the pallets.

10. Storage rack according to at least one of claims 1 to 9,
**characterised in that**
it comprises a plurality of racks (1) positioned with their end faces next to one another, with a common rack-servicing apparatus (7) and in each case at least one common station cart (8) and upper cart (9).

## Revendications

1. Rayonnage comprenant au mois une étagère (1) pourvue d'un certain nombre d'emplacements de stockage (4) agencés en superposition, dédiés à des palettes (5) qui sont retenues, auxdits emplacements de stockage (4), sur des montants verticaux (2) d'appui d'étagères disposés frontalement, et qui peuvent être prélevées horizontalement hors desdits emplacements de stockage (4) dans le sens latéral ; un appareil (7) de desserte d'étagères, affecté au prélèvement de palettes (5) hors des emplacements de stockage (4) et à leur insertion auxdits emplacements ; ainsi qu'un chariot posté (8) qui matérialise l'emplacement de stockage (4) situé le plus bas, est prévu pour recevoir une palette (5) et peut être déplacé, dans le sens horizontal, sur une première paire de rails (12) dépassant de l'étagère (1) du côté de ladite étagère (1) tourné à l'opposé de l'appareil (7) de desserte d'étagères, sachant qu'un chariot supérieur (9), situé au-dessus dudit chariot posté (8), matérialise un autre emplacement de stockage (4), est prévu pour recevoir une palette (5) et peut être déplacé, dans le sens horizontal, sur une seconde paire de rails (13) dépassant de l'étagère (1) du côté de ladite étagère (1) tourné à l'opposé dudit appareil (7) de desserte d'étagères,
**caractérisée par le fait**
**que** la seconde paire de rails (13) s'étend pour l'essentiel à une même hauteur que la première paire de rails (12), est dotée d'un écartement comparativement plus grand et dépasse pareillement au-delà de l'étagère (1), le chariot supérieur (9) présentant, sur son côté tourné à l'opposé de l'appareil (7) de desserte d'étagères, une structure de support (15, 16) qui est dotée, dans la région du chariot posté (8), d'une largeur intérieure horizontale excédant la longueur d'une palette (5), et est équipée de roues (18) roulant sur ladite seconde paire de rails (13), tandis que les parties (17, 20) dudit chariot supérieur (9), n'appartenant pas à ladite structure de support (15, 16), peuvent être rentrées entre les montants verticaux (2) d'appui de ladite étagère (1).

2. Rayonnage selon la revendication 1,
**caractérisé par le fait**
**que** la structure de support du chariot supérieur (9) est réalisée sous la forme d'un encadrement (14) de type portique, comprenant une traverse d'entretoisement (15) et deux montants de support (16) aux extrémités desquels les roues (18) sont disposées.

3. Rayonnage selon la revendication 2,
**caractérisé par le fait**
**que** les roues (18) du chariot supérieur (9) sont disposées, aux extrémités des montants de support, avec retrait vers l'intérieur par rapport à la largeur intérieure desdits montants de support (16).

4. Rayonnage selon au moins l'une des revendications 2 ou 3,
**caractérisé par le fait**
**que** les extrémités des montants de support du chariot supérieur (9) sont pourvues de bras inférieurs (17) en saillie qui s'étendent, à chaque fois, parallèlement aux rails de la seconde paire de rails (13), et auxquels les roues (18) sont fixées.

5. Rayonnage selon au moins l'une des revendications 1 à 4,
**caractérisé par le fait**
**que** les parties du chariot supérieur (9) qui n'appartiennent pas à la structure de support sont constituées, pour l'essentiel, de bras supérieurs (20) en saillie au nombre de deux ou plus, fixés à ladite structure de support et pouvant être rentrés entre les montants verticaux (2) d'appui de l'étagère (1).

6. Rayonnage selon la revendication 5,
**caractérisé par**
la présence de deux bras supérieurs (20) en saillie qui soutiennent les palettes (5), dans les régions extrêmes frontales de ces dernières, et remplissent la fonction d'un emplacement de stockage (4).

7. Rayonnage selon au moins l'une des revendications 1 à 6,
**caractérisé par le fait**
**que** les deux paires de rails (12, 13) sont posées au sol du site d'implantation des étagères.

8. Rayonnage selon au moins l'une des revendications 1 à 7,
**caractérisé par le fait**
**que** le chariot supérieur (9) matérialise l'emplacement de stockage (4) situé immédiatement au-dessus du chariot posté (8).

9. Rayonnage selon au moins l'une des revendications 1 à 8,
**caractérisé par le fait**
**que** les emplacements de stockage (4) sont munis de rails de glissement (3) ou rails de retenue extrêmes, fixés aux montants verticaux (2) d'appui d'étagères en vue de recevoir les faces extrêmes des palettes.

10. Rayonnage selon au moins l'une des revendications 1 à 9,
**caractérisé par le fait**
**qu'**il compte une pluralité d'étagères (1) aboutées frontalement, associées à un appareil commun (7) de desserte d'étagères et à au moins des chariots posté (8) et supérieur (9), respectivement communs.
